# EUROPEAN PATENT APPLICATION

(11) **EP 4 290 338 A1**
(43) Date of publication of application: **13.12.2023**
(21) Application number: 22201599.2
(22) Date of filing: 14.10.2022
(51) Int. Cl.: G06F 3/01, G06F 3/03, G06V 40/10, G06N 3/08

(54) **METHOD AND APPARATUS FOR INPUTTING INFORMATION, AND STORAGE MEDIUM**

(30) Priority: 07.06.2022 CN 202210642074
(71) Applicant: Beijing Xiaomi Mobile Software Co., Ltd., Beijing 100085 (CN)
(72) Inventor: ZENG, Xuezhong, Beijing, 100085 (CN); DOU, Zifei, Beijing, 100085 (CN); LI, Cheng, Beijing, 100085 (CN); WANG, Xingyan, Beijing, 100085 (CN)
(74) Representative: Zimmermann, Tankred Klaus

(57) **Abstract**

Aspects of the present invention are directed to a method for inputting information, including: obtaining a hand image; determining one or more first fingers in an open state in the hand image, and a target touch area touched by a second finger, the target touch area being one of predefined touch areas pre-divided in the one or more first fingers, in a palm, or in the one or more first fingers and the palm; determining target information to be input according to the one or more first fingers in the open state and the target touch area touched by the second finger.

## Description

### TECHNICAL FIELD

The present invention relates to the field of information technology, and in particular, to a method and an apparatus for inputting information, and a storage medium.

### BACKGROUND

In the related art, an electronic device generally has an input device and an output device. For example, typical input devices may include a keyboard, a mouse, and/or a touch screen. Typical output devices may include a display screen, a speaker, and/or a projector.

When the input device is used to input information, a user has to be near the input device in the process of inputting and needs to master use skills of the input device.

In brief, the related technologies have the characteristics of complex and inconvenient interaction with devices.

### SUMMARY

Embodiments of the present invention provide a method and an apparatus for inputting information, and a storage medium.

A first aspect of embodiments of the present invention provides a method for inputting information, including: obtaining a hand image; determining one or more first fingers in an open state in the hand image, and a target touch area touched by a second finger, the target touch area being one of set touch areas pre-divided in the one or more first fingers or in a palm or in the one or more first fingers and the palm; and determining target information to be input according to the one or more first fingers in the open state and the target touch area.

In some embodiments, the set touch areas include at least one of: an area between finger knuckles, an area between a fingertip and a finger knuckle, an area in the palm near a finger base, an area where a fingertip is located, an area at an interdigital space between the fingers that are closed together, an area where a finger knuckle is located, and an area inside the palm.

In some embodiments, determining the target information to be input according to the one or more first fingers in the open state and the target touch area, includes: determining the target information to be input according to the one or more first fingers in the open state and the target touch area, based on preset correspondence relationships. The preset correspondence relationships at least comprise a relationship between each set touch area in the one or more first fingers or in the palm or in the one or more first fingers and the palm and the input information, with different first fingers in the open state.

In some embodiments, the preset correspondence relationships are determined according to at least one of: a relationship between a number of set touch areas divided in the one or more first fingers or in the palm or in the one or more first fingers and the palm and a number of input keys related to input contents or input functions, with different first fingers in the open state; a relationship between the number of set touch areas divided in the one or more first fingers or in the palm or in the one or more first fingers and the palm and a number of input keys with a usage frequency greater than a preset frequency, with different first fingers in the open state; a relationship between a relative position between the set touch areas divided in the one or more first fingers or in the palm or in the one or more first fingers and the palm and keys with a probability of being continuously selected by a user higher than a preset probability, with different first fingers in the open state.

In some embodiments, before obtaining the hand image, the method further includes: displaying in each set touch area of the one or more first fingers or the palm or the one or more first fingers and the palm, the input information corresponding to the set touch area according to the preset correspondence relationships.

In some embodiments, obtaining the hand image includes: in response to detecting that the second finger touches any target touch area in the set touch areas, obtaining the hand image; or in response to detecting that a touch duration of the second finger touching any target touch area in the set touch areas exceeds a preset duration, obtaining the hand image of any frame within the touch duration.

In some embodiments, before obtaining the hand image, the method further includes: determining whether a set wake-up operation is detected. The set wake-up operation is configured to instruct start of information input through the hand image.

In some embodiments, determining the one or more first fingers in the open state in the hand image, and the target touch area touched by the second finger, includes: when there is a single hand in the hand image, determining the one or more first fingers in the open state of the single hand, and the target touch area touched by the second finger of the single hand in the single hand, the single hand being a left or right hand; when there are left and right hands in the hand image, determining the one or more first fingers in the open state of the left hand, and the target touch area touched by the second finger of the left hand in the left hand, and determining the one or more first fingers in the open state of the right hand, and the target touch area touched by the second finger of the right hand in the right hand.

In some embodiments, determining the one or more first fingers in the open state in the hand image, and the target touch area touched by the second finger, includes: determining a gesture group based on the one or more first fingers in the open state, in which the gesture group comprises a plurality of gesture operations formed by touching different set touch areas with the second finger, when the one or more first fingers are determined to be in the open state; and determining the gesture operation corresponding to the hand image from the determined gesture group, and determining the target touch area touched by the second finger according to the determined gesture operation.

A second aspect of embodiments of the present invention provides an apparatus for inputting information, including: an obtaining module, configured to obtain a hand image; a first determining module, configured to determine one or more first fingers in an open state in the hand image, and a target touch area touched by a second finger, in which the target touch area is one of set touch areas pre-divided in the one or more first fingers or in a palm or in the one or more first fingers and the palm; and a second determining module, configured to determine target information to be input according to the one or more first fingers in the open state and the target touch area.

In some embodiments, the second determining module is further configured to determine the target information to be input according to the one or more first fingers in the open state and the target touch area, based on preset correspondence relationships, in which the preset correspondence relationships at least comprise a relationship between each set touch area in the one or more first fingers or in the palm or in the one or more first fingers and the palm and the input information, with different first fingers in the open state.

In some embodiments, the obtaining module is further configured to display in each set touch area of the one or more first fingers or the palm or the one or more first fingers and the palm, the input information corresponding to the set touch area according to the preset correspondence relationships.

In some embodiments, the obtaining module is further configured to obtain the hand image in response to detecting that the second finger touches any target touch area in the set touch areas, or obtain the hand image of any frame within the touch duration in response to detecting that a touch duration of the second finger touching any target touch area in the set touch areas exceeds a preset duration.

In some embodiments, the obtaining module is further configured to determine whether a set wake-up operation is detected. The set wake-up operation is configured to instruct start of information input through the hand image.

A third aspect of embodiments of the present invention provides a non-transitory computer-readable storage medium. When instructions in the storage medium are executed by a processor of a computer, the computer is enabled to implement the method for inputting information provided by any of the embodiments of the first aspect.

According to embodiments of the present invention, the target information to be input by the user is determined according to the target touch area touched by the second finger. Thus, without the aid of external devices, the user can easily input target information using operation gestures.

### BRIEF DESCRIPTION OF THE DRAWINGS

The drawings herein are incorporated into the specification and form a part of this specification, showing embodiments consistent with the present invention, and are used together with the specification to explain the principles of the present invention.
Fig. 1 is a flowchart of a method for inputting information according to an embodiment.
Fig. 2 is a flowchart of a method for inputting information according to an embodiment.
Fig. 3 is a schematic diagram of a set touch area of one or more first fingers according to an embodiment.
Fig. 4 is a schematic diagram of a set touch area of one or more first fingers according to an embodiment.
Fig. 5 is a schematic diagram of a set touch area of one or more first fingers according to an embodiment.
Fig. 6 is a schematic diagram of a set touch area of one or more first fingers according to an embodiment.
Fig. 7 is a schematic diagram of an operation gesture according to an embodiment.
Fig. 8 is a schematic diagram of an operation gesture according to an embodiment.
Fig.9 is a flowchart of a method for inputting information according to an embodiment.
Fig. 10 is a schematic diagram of a set touch area of one or more first fingers according to an embodiment.
Fig. 11 is a block diagram of an apparatus for inputting information according to an embodiment.
Fig. 12 is a block diagram of an electronic device according to an embodiment.

### DETAILED DESCRIPTION

Embodiments will be described in detail herein, examples of which are illustrated in the accompanying drawings. Where the following description refers to the drawings, the same numerals in different drawings refer to the same or similar elements unless otherwise indicated. The implementations described in the embodiments below are not intended to represent all implementations consistent with the present invention. Rather, they are merely examples of means consistent with some aspects of the present invention as recited in the appended claims.

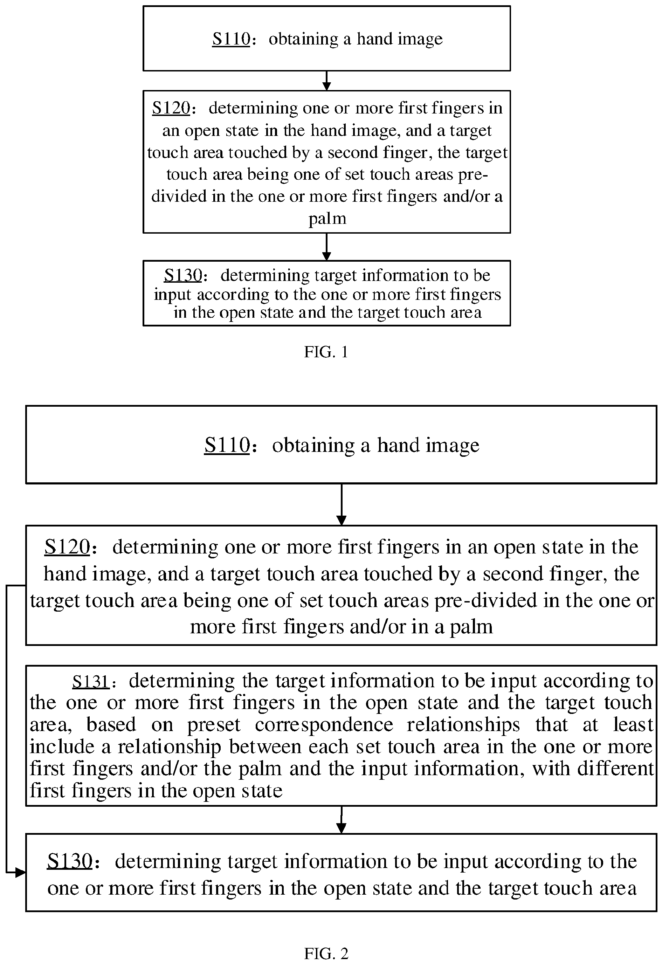

As illustrated in Fig.1, an embodiment of the present invention provides a method for inputting information. The method includes:
S110: obtaining a hand image;
S120: determining one or more first fingers in an open state in the hand image, and a target touch area touched by a second finger, the target touch area being one of set or predefined touch areas pre-divided in the one or more first fingers or in a palm or in the one or more first fingers and the palm; and
S130: determining target information to be input according to the one or more first fingers in the open state and the target touch area.

The method for inputting information provided by the embodiment of the present invention may be executed by a target device itself that receives the target information or the control device of the target device.

The target device includes but is not limited to: a fixed device and/or a mobile device.

The mobile device includes but is not limited to: a mobile phone, a tablet computer, a wearable device, a smart home device, a smart office device, and/or an onboard device.

The smart home device includes but is not limited to: a smart speaker and/or smart door and window.

The fixed device includes but is not limited to: a desktop computer and/or a smart TV.

For example, the target device may be a Virtual Reality (VR) device, an Augmented Reality (AR) and/or a Mixed Reality (MR) device. For another example, the target device may be an Internet of Things (IoT) device. The IoT device may be an Artificial intelligence Internet of Things (AIoT) device.

The hand image may be any image collected by a camera, for example, an RGB image and/or a YUV image. In some embodiments, in order to reduce user privacy leakage, the hand image may be a depth image or a gray image of the hand.

Step S 110 may include receiving the hand image collected by other devices, and/or the hand image collected by the camera of the device that executes the method for inputting information.

After the hand image is obtained, an image recognition will be performed to determine the one or more first fingers currently in the open state and the area touched by the second finger.

The second finger may be any one of the fingers of the human body. For example, the second finger may be a thumb, a little finger or others. The one or more first fingers may be any fingers different from the second finger. For example, the first finger(s) is(are) any number of fingers except the thumb, for example, the first finger is the index finger, or the first fingers are the index finger and the middle finger, or the first fingers are the four fingers except the thumb.

The open state refers to that a finger is in an unfolded state or a bent state, or the distance between the fingertip and the palm is greater than a set or predefined distance, for example, the set distance may be 1 cm or 2 cm or less.

When the one or more first fingers are in the open state, set touch areas divided in the one or more first fingers can be determined from the hand image.

In some embodiments, the target touch area touched by the second finger in the one or more first fingers may include but is not limited to, at least one of: a finger pulp of the second finger touching an area of the first finger; a finger pulp of the second finger touching an area of the first finger; a finger back of the second finger touching an area of the first finger; a fingertip of the second finger touches an area of the first finger.

In other embodiments, the area touched by the second finger may be any other parts of the same hand as the second finger.

Generally, in accordance with embodiments of the present invention, the target information that the user intends to input is determined according to the one or more first fingers in the open state and the target touch area of the one or more first fingers and/or the palm touched by the second finger. When the one or more first fingers in the open state are different, the input information represented by each set touch area divided in the one or more first fingers and/or the palm is also different.

In some embodiments, the set touch areas include at least one of: an area between finger knuckles, an area between a fingertip and a finger knuckle, an area in the palm near a finger base, an area where a fingertip is located, an area at an interdigital space between the fingers that are closed together, an area where a finger knuckle is located, and an area in the palm near the finger knuckle at a finger base.

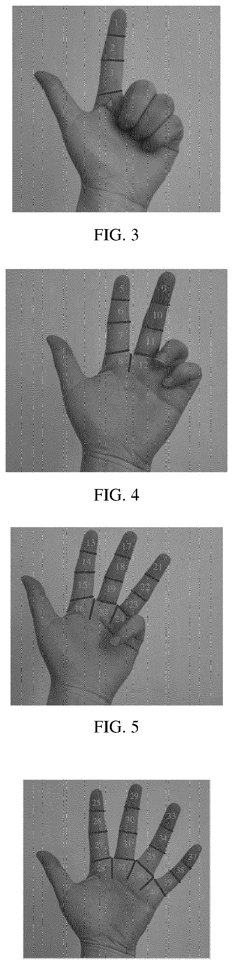

As illustrated in Fig. 3 to Fig. 6, it is assumed that the second finger is the thumb, and all of the remaining index finger, middle finger, ring finger, and little finger are the first fingers. In Figs. 3 to 6, areas divided by black lines in the fingers are the set touch areas. In each first finger, the position of the black line is the finger knuckle.

As illustrated in Fig. 3, the index finger of the first fingers is in the open state, the second finger is the thumb, and the areas touched by the thumb may include: an area 1 where the fingertip is located, an area 2 between the finger knuckles, an area 3 between the finger knuckles and an area 4 in the palm near the finger knuckle at the index finger base.

As illustrated in Fig. 4, the index finger and the middle finger of the first fingers are in the open state, the second finger is the thumb, and the area touched by the thumb may include: an area 5 where the fingertip of the index finger is located, an area 6 between the finger knuckles of the index finger, an area 7 between the finger knuckles of the index finger, an area 8 in the palm near the finger knuckle at the index finger base, an area 9 where the fingertip of the middle finger is located, an area 10 between the finger knuckles of the middle finger, an area 11 between the finger knuckles of the middle finger, and an area 12 in the palm near the finger knuckle at the middle finger base.

As illustrated in Fig. 5, the index finger, middle finger and ring finger are in the open state, the second finger is the thumb, and the area touched by the thumb may include: an area 13 where the fingertip of the index finger is located, an area 14 between the finger knuckles of the index finger, an area 15 between the finger knuckles of the index finger, an area 16 in the palm near the finger knuckle at the index finger base, an area 17 where the fingertip of the middle finger is located, an area 18 between the finger knuckles of the middle finger, an area 19 between the finger knuckles of the middle finger, an area 20 in the palm near the finger knuckle at the middle finger base, an area 21 where the fingertip of the ring finger is located, an area 22 between the finger knuckles of the ring finger, an area 23 between the finger knuckles of the ring finger, an area 24 in the palm near the finger knuckle at the ring finger base.

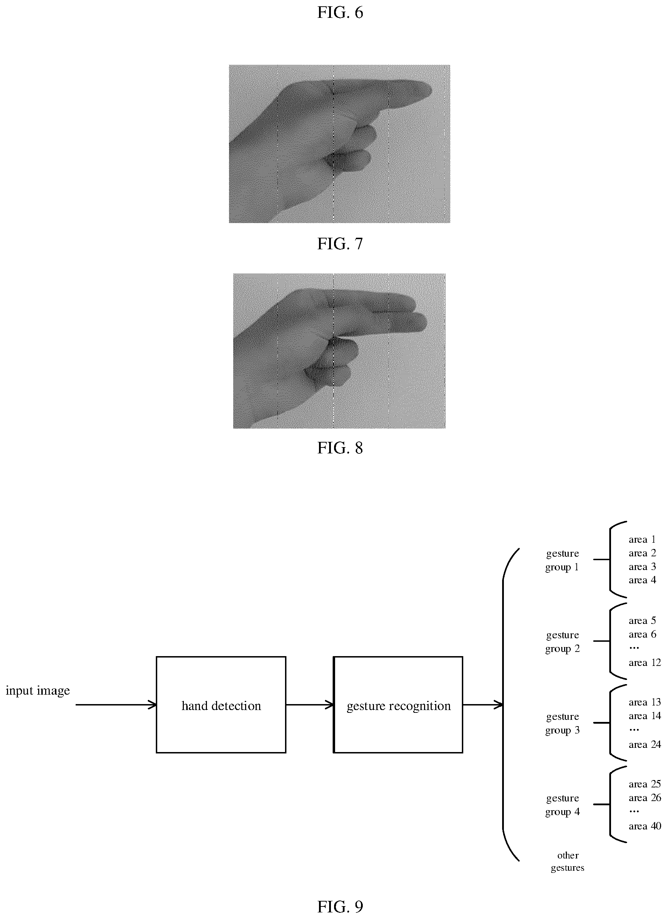

As illustrated in Fig. 6 , the index finger, middle finger, ring finger and little finger are in the open state, the second finger is the thumb, and the area touched by the thumb may include: an area 25 where the fingertip of the index finger is located, an area 26 between the finger knuckles of the index finger, an area 27 between the finger knuckles of the index finger, an area 28 in the palm near the finger knuckle at the index finger base, an area 29 where the fingertip of the middle finger is located, an area 30 between the finger knuckles of the middle finger, an area 31 between the finger knuckles of the middle finger, an area 32 in the palm near the finger knuckle at the middle finger base, an area 33 where the fingertip of the ring finger is located, an area 34 between the finger knuckles of the ring finger, an area 35 between the finger knuckles of the ring finger, an area 36 in the palm near the finger knuckle at the ring finger base, an area 37 where the fingertip of the little finger is located, an area 38 between the finger knuckles of the little finger, an area 39 between the finger knuckles of the little finger, an area 40 in the palm near the finger knuckle at the little finger base.

In an embodiment, the areas in the palm near the finger knuckle at a finger base may include: area 4, area 8, area 12, area 16, area 20, area 24, area 28, area 32, area 36 and area 40. The areas where a fingertip is located may include: area 1, area 5, area 9, area 13, area 17, area 21, area 25, area 29, area 33 and area 37.

Generally, in accordance with embodiments of the present invention, the input of target information can be realized by touching one or more set touch areas of the one or more first fingers in the open state with the second finger. In this way, without using an external device, the user can easily realize the input of target information through operation gestures.

As illustrated in Fig. 2, step S130 may include:
S131, determining the target information to be input according to the one or more first fingers in the open state and the target touch area, based on preset correspondence relationships that at least include a relationship between each set touch area in the one or more first fingers and/or the palm and the input information, with different first fingers in the open state.

When different first fingers are in the open state, the preset correspondence relationships are different. That is, different first fingers in the open state correspond to different operation gestures of the user, and different operation gestures correspond to different preset correspondence relationships, which can realize the input of different target information. Therefore, various operation gestures and convenient input of different target information in a large range can be realized.

For example, as illustrated in Fig. 3, when only the index finger is in the open state, the preset correspondence relationship may include: the input information corresponding to area 1 is to trigger a photographing function, the input information corresponding to area 2 is a function corresponding to a menu key, the input information corresponding to area 3 is a function corresponding to a return key, and the input information corresponding to area 4 is a function corresponding to a dial key.

As illustrated in Fig. 4, the input information corresponding to area 5 is to return to the desktop, the input information corresponding to area 6 is to return to a previous interface, the information corresponding to area 7 is to turn to a next interface, and the input information corresponding to area 8 is a screenshot function, the input information corresponding to area 9 is cursor up, the input information corresponding to area 10 is cursor down, the information corresponding to area 11 is scroll bar up, and the input information corresponding to area 12 is scroll bar down.

As illustrated in Fig. 5, the input information, that areas 5, 17, 21, 14, 15, 22, 15, 19, 23, 16 correspond to respectively from left to right and from top to bottom, is numbers 7, 8, 9, 4, 5, 6, 1, 2, 3, and 0. The input information corresponding to area 20 may be a function of a delete key. The input information corresponding to area 24 may be a function of an Enter key.

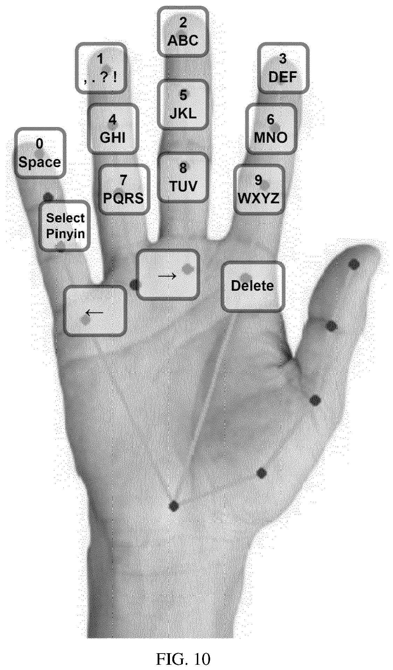

As illustrated in Fig. 6 and Fig. 10, the input information, that areas 25, 29, 33, 26, 30, 34, 37, 27, 31, 34, 38, 28, 32, 36 and 40 correspond to respectively from left to right and from top to bottom, is the characters "DEF", "ABC", "1, .?!", "MNO", "JKL", "GHI", "0 space", "WXYZ", "TUV", "PQRS", "Select Pinyin", "delete", left arrow and right arrow keys.

The above are just examples, and the specific implementation is not limited to the above examples.

Generally, when different first fingers are in the open state, the preset correspondence relationships are different, that is, when different first fingers are in the open state, the input information corresponding to each set touch area is different, and then the target information to be input is determined according to the area touched by the second finger, and the input of different target information can be realized by different correspondence relationships.

As illustrated in Fig. 7, according to the preset correspondence relationship with the index finger in the open state, and according to the target touch area (the area between the fingertip and the finger knuckle in Fig. 7) touched by the thumb, the target information to be input is determined.

As illustrated in Fig. 8, according to the preset correspondence relationship with the index finger and the middle finger in the open state, and according to the target touch area (the area between the finger knuckles in Fig. 8) touched by the thumb, the target information to be input is determined.

In some embodiments, the preset correspondence relationships are determined according to at least one of: a relationship between a number of set touch areas divided in the one or more first fingers and/or the palm and a number of input keys related to input contents or input functions, with different first fingers in the open state; a relationship between a number of set touch areas divided in the one or more first fingers and/or the palm and a number of input keys with a usage frequency greater than a preset frequency, with different first fingers in the open state; a relationship between a relative position between the set touch areas divided in the one or more first fingers and/or the palm and keys with a probability of being continuously selected by a user higher than a preset probability, with different first fingers in the open state.

The preset correspondence relationship indicates the set touch area and associated input information or an associated input function. In practice, the input content or function represented by the input key can be used as input information. For example, the input information corresponding to the delete key is the delete function, and the input information corresponding to the key that corresponds to number 1 in the numeric keypad is the number 1.

Since the first fingers in the open state are different, the number of set touch areas that can be divided in the one or more first fingers and/or the palm is also different, which may also affect to a certain extent the input keys corresponding to the set touch areas.

For example, as illustrated in Fig. 3, when only the index finger is in the open state, and the divided set touch areas are the areas 1-4, and it is impossible to correspond each key in a T9 Pinyin keyboard with an associated input content to a set or predefined touch area due to the number of input keys, only the input keys that are not associated with the input content or the input function can be associated with the four set touch areas (for example, the areas 1-4 respectively correspond to the trigger of the photographing function, menu key, return key and dial key), or only the keys, that are associated with the input content or the input function and the number of which that is less than or equal to 4, can be corresponded with the set touch area (for example, the areas 1-4 respectively correspond to the up arrow, down arrow, left arrow and right arrow).

In this way, according to the differences and number of the first fingers in the open state, the preset correspondence relationships can be easily recalled, so that the set touch areas suitable for the posture corresponding to the current gesture are displayed on the hand, prompting the user to operate, so as to assist the user to better realize the information input and trigger of the input function.

When the first fingers in the open state are different, the number of set touch areas that can be divided in the one or more first fingers and/or the palm is different. When the number of set touch areas is limited, some input keys with high usage frequency can be selected to correspond to the set touch areas. For example, as illustrated in Fig. 4, the first fingers in the open state are respectively the index finger and the middle finger, which is different from Fig. 3 where the first finger in the open state is only the index finger. In this case, the set touch areas in the index finger, middle finger and palm cannot enable each key in the T9 Pinyin keyboard to correspond to a set or predefined touch area. In this case, M input keys with the highest usage frequency are determined according to the history of key operation, and the M input keys are corresponded to the set touch areas in the index finger and the middle finger in the open state. For example, the value of M may be equal to the number of set touch areas when the index finger and the middle finger are in the open state.

When the input keys with a higher usage frequency are selected to correspond to the set touch areas, in this way, when the number of first fingers in the unfolded state is small, the input keys or input functions with a higher frequency can be preferentially displayed in the set touch areas to facilitate the operation of user, reducing the operation for triggering display of the input keys and/or input functions in the set touch areas, improving the intelligence of the device and the ease of use of the user.

There is a correlation between input contents or functions corresponding to some input keys. The correlation can be the correlation of the input content or the input functions themselves (for example, Pinyin keys in the T9 keyboard have correlation, and the keys representing the up arrow, down arrow, left arrow and right arrow functions have correlation). The correlation can also be reflected by the probability of the user continuously selecting the key. For example, in most cases, the user selects the key 2 after selecting the key 1, and the probability that the key 1 and the key 2 are continuously selected is higher than the probability that the key 1 and other keys are continuously selected, then it can be considered that there is a certain correlation between the key 1 and the key 2. When setting a preset correspondence relationship, the keys having a high correlation or a high probability of being continuously selected by the user may be corresponded with the set touch areas that are located close. For example, if one of the left move key and the right move key is selected, there is a great probability that the other will be selected. When the left move key is selected, the probability that the right move key is selected is greater than the probability of a letter key. Therefore, in the correspondence relationships shown in Fig. 10, the left move key and the right move key are adjacent. Generally, by adopting the correspondence relationships mentioned in this embodiment, the operation of two keys with correlation in the probability of being selected is facilitated without moving largely the second finger of the user, and improve the convenience of information input.

The usage frequency of the input key and/or the probability that the key is continuously selected by the user may be determined according to the history record information of the target device or the control device of the target device being operated by the user. For example, history record information of information input is obtained within a specific period of time before the current time; the usage frequencies of the T9 Pinyin keyboard and/or other input keys are determined according to the historical record information, and the usage frequencies are sorted from high to low, so as to determine the input key with the usage frequency greater than the preset frequency.

For another example, history record information of information input is obtained within a specific period of time before the current time; the probabilities of continuous selection of the T9 Pinyin keyboard and/or any other two keys are determined according to the history record information, and the relationship between the keys with the probability of being continuously selected by the user higher than the preset probability is determined.

In some embodiments, the number of set touch areas may also be set according to the number of keys that need to be set. For example, the number of 3-4 keys that are most frequently used by the user can be counted. When this embodiment is applied, the set touch areas are set to 3-4 areas.

In some embodiments, before the hand image is obtained, the method also includes displaying in each set touch area of the one or more first fingers and/or the palm the input information corresponding to this set touch area according to the preset correspondence relationships.

For example, as illustrated in Fig. 10, in accordance with embodiments of the present invention, the input information may be displayed in each set touch area by means of displaying, so as to facilitate the user to touch the corresponding set touch area of the one or more first fingers with the second finger, completing the input of target information.

Fig. 10 shows a one-handed input keyboard with displayed character inputs, left move key, right move key, and delete key on the user's second finger.

For example, the user's smart glasses and/or head mounted device and/or smart home device may display input information on the user's hand through a projector or the like.

Corresponding input information is displayed in each set touch area of the hand image, which can intuitively prompt the user for input information corresponding to respective set touch areas, and assist the user to quickly and accurately select the input information. It is understood that when the user is familiar with the input information corresponding to each set touch area (for example, there are fewer set touch areas, so the preset correspondence relationships are simple, and the user can easily remember the input information corresponding to each set touch area), the input information corresponding to the respective set touch areas may not be displayed in each set touch area, and the user realizes information input through touch typing.

In some embodiments, after displaying in each set touch area the input information corresponding to the set touch area according to the preset correspondence relationships, the method also includes: in response to determining the target information to be input, changing a display state of the target touch area and/or the target information to be input corresponding to the target touch area to notify the user.

The display state of the target touch area and/or the target information to be input may be changed by at least one of: highlighting the target touch area, highlighting a contour of the target touch area, highlighting the target information to be input, highlighting a contour of the target information to be input, displaying the target touch area in a color different from the other set touch areas, displaying the contour of the target touch area in a color different from the contours of other set touch areas, displaying the target information to be input in a color different from other input information, displaying the contour of the target information to be input in a color different from the contours of the other input information.

For example, when the target touch area and target information to be input is determined, the target touch area and/or the target information may be highlighted, or the target touch area may be displayed in a color different from the color used to display all other set touch areas. Therefore, the user can be better informed of the target area touched by the second finger and/or the corresponding target information to be input.

In some embodiments, the step S110 may include: in response to detecting that the second finger touches any target touch area in the set touch areas, obtaining the hand image; or in response to detecting that a touch duration of the second finger touching any target touch area in the set touch areas exceeds a preset duration, obtaining the hand image of any frame within the touch duration.

Specifically, the step provided in this embodiment may be executed after "displaying in each set touch area of the one or more first fingers and/or the palm the input information corresponding to this set touch area according to the preset correspondence relationships".

The target device may include an image obtaining module that can obtain images.

For example, the input information corresponding to each set touch area is displayed in the respective set touch areas on the user's current first finger and/or palm. When the user has a demand for information input or a trigger of input function, the user will use the second finger to touch any one of the set touch areas in the one or more first fingers and/or the palm, and then the image obtaining module may obtain the corresponding picture at this time.

For example, through the preview image obtained by the image obtaining module, it may be determined whether the set touch area on the user's first fingers is touched by the second finger. When it is determined according to the obtained image that the second finger touches any one of the set touch areas of the one or more first fingers, the user may be using the operation gesture to input information. At this time, by understanding the obtained hand image, any operation gesture that the user intends to input may be timely recognized, improving the response rate. When it is detected that the second finger of the user is in the first finger, it needs to formally obtain the corresponding hand image, and the input information of the user is determined based on the formally obtained hand image, so as to easily realize the trigger of obtaining the hand image, and reduce unnecessary collection and generation of the hand image.

In some embodiments, in order to reduce operations, a duration ofthe second finger touching each set touch area (i.e., the touch duration) is detected. When the touch duration is very short, the obtained image may be unclear, or after restoring the user's operation gesture through the anti-shake algorithm of the image obtaining module, the touch duration of the operation gesture is found to be very short, it may be the user's unconscious mis-operation, which may not be regarded as the user's conscious input of target information.

For example, according to whether a gesture of the user is clear in a single image and/or the number of images of the gesture included in images obtained at a predetermined frequency, the touch duration of the second finger touching the set touch areas may be detected. The set duration can be preset to any empirical value or experimental value, and the set duration can be 0.5 seconds or 1 second. The set duration can be used to distinguish whether the user intentionally performs a specific gesture or generates an unconscious gesture, so as to realize the input of target information, and suppress the user's unconscious gesture operation during the movement process, reducing the wrong input of target information.

When the touch duration exceeds the preset duration, the hand image of any frame within the touch duration is obtained, and this hand image is analyzed and processed, which reduces the processing of hand images whose touch duration does not exceed the set duration, and reduces unnecessary computation and mis-operations introduced by unnecessary computation, improving the accuracy of information input in accordance with embodiments of the present invention.

In some embodiments of the present invention, before obtaining the hand image, the method also includes: determining whether a set or predefined wake-up operation is detected. The set wake-up operation is configured to instruct start of information input through the hand image.

The obtaining of the target information input by the user through the hand image may not need to be executed all the time.

In the embodiments of the present invention, the wake-up operation may be a voice operation, an operation of acting on a physical key on the target device or a virtual key displayed on the display screen of the target device, or a specific air separation operation gesture.

It can be understood that, when the set wake-up operation is detected, the hand image is obtained to realize information input through the hand image, by performing a scheme provided by any of the above embodiments. More specifically, when the set wake-up operation is detected, input information corresponding to each set touch area may be displayed in respective set touch areas of the one or more first fingers and/or the palm according to the preset correspondence relationships, and then the hand image may be obtained. Alternatively, when the set wake-up operation is detected, the hand image is obtained in response to detecting that the second finger touches any target touch area in the set touch areas, or the hand image of any frame within the touch duration is obtained in response to detecting that the touch duration of the second finger touching any target touch area in the set touch areas exceeds a preset duration.

In an embodiment of the present invention, after the set wake-up operation is detected, it is also possible to display input information corresponding to each set touch area in respective set touch areas of the one or more first fingers and/or the palm according to the preset correspondence relationships, and then obtain the hand image in response to detecting that the second finger touches any target touch area in the set touch areas; or the hand image of any frame within the touch duration is obtained in response to detecting that the touch duration of the second finger touching any target touch area in the set touch areas exceeds a preset duration.

Generally, the method for inputting information provided by any aforementioned embodiments as illustrated in these figures is started after the set wake-up operation is detected, which realizes the start trigger of inputting information by using the air separation operation gesture, and reduces the power consumption caused by the target device or the control device of the target device as being in the state of detecting the operation gesture all the time, extending the standby time of the target device and/or the standby time of the control device of the target device.

In some embodiments, the step of determining the one or more first fingers in the open state in the hand image, and the target touch area touched by the second finger in the one or more first fingers and/or the palm, includes: when there is a single hand in the hand image, determining the one or more first fingers in the open state of the single hand, and the target touch area touched by the second finger of the single hand in the one or more first fingers and/or the palm of the single hand, the single hand is a left or right hand; when there are left and right hands in the hand image, determining the one or more first fingers in the open state of the left hand, and the target touch area touched by the second finger of the left hand in the one or more first fingers and/or the palm of the left hand, and determining the one or more first fingers in the open state of the right hand, and the target touch area touched by the second finger of the right hand in the one or more first fingers and/or the palm of the right hand.

The one or more first fingers and the second finger are fingers of the same hand.

In the scenario that user is operating with one hand, the hand image may be the left hand image or the right hand image of the user. That is, the left and right hand images can use the above information input method to realize the user's target information input. Thus, it is convenient for users with different hands to complete the target information input using the information input method in accordance with embodiments of the present invention.

The method for inputting information provided in accordance with embodiments of the present invention can also be operated with two hands. At this time, the left hand and the right hand of the user can be seen in the hand image, and the left hand and the right hand of the user have the one or more first fingers and the second finger, respectively. At this time, the operation gesture of the user's left hand and the operation gesture of the user's right hand may be the same operation gesture or different operation gesture s.

When the operation gesture of the left hand and the operation gesture of the right hand are the same, it indicates that the first fingers in the open state and the number of the first fingers in the left hand are the same as the first fingers in the open state and the number of the first fingers in the right hand, and the target set area of the first finger touched by the second finger of the left hand is the same as the target set area of the first finger touched by the second finger of the right hand.

When the operation gesture of the left hand and the operation gesture of the right hand are different, it indicates that the number of the one or more first fingers in the open state of the left hand may be different from that of the right hand, and/or the target set area of the first finger touched by the second finger of the left hand may be different from that of the right hand. The operation gesture, that the second finger touches the first finger, of both hands can jointly realize information input.

When the operation gestures of the user's left hand and right hand are considered at the same time, the number of operation gestures can be further increased to achieve more information input, facilitating the satisfaction of various input needs of the user under different input scenarios, and improving the intelligence of the device and the recognition range of operation gestures.

In the above embodiments, the one or more first fingers and the second finger are fingers of the same hand, and the second finger is a thumb. Since the thumb can easily touch the areas of other fingers or palms, it provides a more convenient and applicable information input method when the second finger is the thumb.

In some embodiments, the recognition of "the one or more first fingers in the open state, and the target touch area touched by the second finger in the one or more first fingers and/or the palm" can be realized by a pre-trained deep learning model. The deep learning model includes but is not limited to various types of neural networks. The neural network may include, but is not limited to a convolutional neural network and/or a cyclic neural network.

For example, the feature extraction layer of the deep learning model extracts a multi-dimensional feature vector of the hand image. The multi-dimensional feature vector reflects at least a target touch area of the one or more first fingers touched by the second finger; the full connection layer of the deep learning model fully connects the multidimensional feature vectors to obtain the classification probability of the operation gesture; the operation gesture is determined according to the classification probability; the target information is determined according to the operation gesture.

By using the deep learning model to recognize the operation gesture and confirm the target information, the target information input accuracy of the operation gesture can be improved.

The deep learning model may include one or more feature extraction layers that may include a convolution layer for convolution operation and a pooling layer for pooling operation.

The convolution operation includes, but is not limited to depthwise separable convolution.

The pooling operation includes a maximum pooling operation and/or an average pooling operation.

The multi-dimensional feature vector may reflect information such as the area touched by the second finger from different dimensions.

For example, the multi-dimensional feature vector may also reflect information such as the number of first fingers in the open state.

The multidimensional feature vectors are spliced through the full connection layer to obtain the probability of various operation gestures in the current hand image, the gesture corresponding to the maximum probability is selected and determined as the operation gesture included in the current hand image.

In some embodiments, the feature extraction layer of the deep learning model extracts the multi-dimensional feature vector of the hand image, including: the feature extraction layer of the deep learning model obtains the multi-dimensional feature vector by convolution, pooling and processing based on an attention mechanism. The attention mechanism includes a spatial attention mechanism and/or a channel attention mechanism.

In a specific implementation, the feature extraction layer may include one or more of the following: a convolution layer for convolution operations; a pooling layer, usually located at the back end of the convolution layer, and configured to pool the characteristics output by the convolution layer; an attention mechanism module, located at the back end of the convolution layer and/or the pooling layer, and configured to perform attention operations on the features output by the convolution layer and/or the pooling layer.

The attention mechanism module includes but is not limited to a spatial attention mechanism module configured to execute a spatial attention mechanism and/or a channel attention mechanism module configured to execute a channel attention mechanism.

Therefore, in some embodiments, the feature extraction layer of the deep learning model performs the convolution, pooling, and processing based on the attention mechanism on the hand image to obtain the multi-dimensional feature vector. The attention mechanism includes the spatial attention mechanism and/or the channel attention mechanism.

In some embodiments, a contour of a hand within the hand image is recognized; the second finger and the one or more first fingers in the open state is determined according to the contour; the area of the one or more first fingers touched by the second finger is determined according to the position of the finger pulp feature points of the second finger and the position of the different areas in the open state.

For example, the deep learning model extracts the outer contour features of the hand from the hand image, and the contour of the hand will be obtained according to the lines of the outer contour feature points. The position of the second finger and the position of the one or more first fingers in the hand image are determined according to the contour of the hand, and further whether the one or more first fingers are in the open state or the curled state is determined according to the contour of the first finger.

After the second finger is determined, the fingertip feature points of the second finger are determined, and the image coordinates (i.e., positions) of the fingertip feature points represent the area where the fingertip of the second finger is located. Then, in combination with the distribution of each area of the first finger, the area where the imaging of the one or more first fingers overlaps with the fingertip of the second finger is determined as the target touch area touched by the fingertip of the second finger.

Generally, there are many ways to determine the area of the one or more first fingers touched by the second finger. The above is an example, and the specific implementation is not limited to the above examples.

Referring to Fig. 9, the deep learning model may receive an input image, perform hand detection and realize gesture recognition. Specifically, referring to Figs. 3 to 6, the operation gesture may include gesture group 1 to gesture group 4, and each gesture group may include one or more operation gestures formed by touching different set touch areas with the second finger.

Therefore, in some embodiments, the gesture group to which the current gesture operation belongs is determined according to the number of first fingers in the open state; the current operation gesture is recognized from the gesture group to which the current gesture operation belongs, and the target touch area touched by the second finger is determined according to the current operation gesture.

For example, referring to Fig. 7, the first finger in the open state is determined to be the index finger, the current operation gesture is formed by touching the index finger with the thumb and is recognized as operation gesture 1, and the target touch area is determined to be the touch area 1 based on the operation gesture 1.

In some embodiments, the method also includes displaying input information corresponding to gesture operations included in a gesture group in a region of the hand or outside the hand, in response to determining the gesture group based on the one or more first fingers in the open state.

For example, referring to Fig. 7, when the index finger in the open state is determined as the first finger, the input information corresponding to the gestures 1-4 may be displayed, through a projector, in the region of the ring finger or the middle finger, or the region outside the hand. For another example, the input information may also be displayed anywhere on the AI glasses, for example, in the upper left corner of the AI glasses.

In some embodiments, after displaying the input information corresponding to the gestures included in the gesture group in the region of the hand or outside the hand, the method also includes: in response to determining the gesture operation corresponding to the hand image from the determined gesture group, changing a display state of the target information to be input corresponding to the determined gesture operation, to notify the user.

For example, the display state of the target information may be changed by at least one of: highlighting the target information to be input, highlighting a contour of the target information to be input, displaying the target information to be input in a color different from other input information, displaying the contour of the target information to be input in a color different from the contours of the other input information.

In some embodiments, step S110 may include: receiving an input image by an input layer of the deep learning model; performing image pre-processing on the input image by a pre-processing layer of the deep learning model, to obtain the hand image with image size and/or image quality meeting preset requirements. The deep learning model further includes a recognition layer, configured to classify the hand gesture according to the hand image and obtain the gesture operation obtained by the input image.

After receiving the input image, the input layer of the deep learning model performs pre-processing on the input image, which includes but is not limited to at least one of: a noise reduction operation of the input image; a clipping operation of the input image, for example, clipping a background region other than the hand imaging region; an image size conversion operation of the input image, for example, converting an image resolution by up sampling or down sampling; a rotation processing of the input image, which enables, after the input image is rotated, the predetermined hand imaging region to be processed through the corresponding channel of the depth learning model.

The above is an example of pre-processing, and the specific implementation is not limited to the above examples. Through the above pre-processing, the deep learning model for subsequent operation gesture classification or recognition can obtain the hand image with image size and/or image quality meeting the preset requirements.

In accordance with embodiments of the present invention, the deep learning model may adapt to process the recognition of operation gestures of input images with different image sizes and/or image qualities through its own pre-processing of the input images, improving the generalization ability of the deep learning model and reducing the limitations on the collection of input images.

In some embodiments, the pre-processing layer of the deep learning model performs image pre-processing on the input image to obtain the hand image with image size and/or image quality meet preset requirements, including: cutting out a first image area including hand imaging from the input image by the pre-processing layer; upsampling or downsampling the first image area to obtain a second image area with image size meeting the preset requirement; and/or performing image quality improvement on the first image area or the second image area to obtain the hand image with image quality meeting the preset requirement.

In some embodiments, the pre-processing layer of the deep learning model performs image pre-processing on the input image to obtain the hand image with image size and/or image quality meeting preset requirements, including: cutting out a first image area including hand imaging from the input image by the preprocessing layer; upsampling or downsampling the first image area to obtain a second image area with image size meeting the preset requirement; and/or performing image quality improvement on the first image area or the second image area to obtain the hand image with image quality meeting the preset requirement.

Improving the image quality may include noise reduction processing and/or pre-processing of interference color removal of the image.

The multidimensional feature vector is extracted through the deep learning model (i.e., neural network) (convolution - pooling), and then the category vector is output through the full connection layer. The classification of gesture operations in the hand image is determined according to which category has the highest probability of the dimension.

The neural network may be a low-grade network, and can be used to perform the depthwise separable convolution. The overall structure is based on depthwise separable convolution;

The attention mechanism is used to participate in feature extraction, the attention mechanism may include a spatial attention mechanism and / or a channel attention mechanism.

The deep learning model may be a multi-task model. Multiple-task branches of the multi-task model can share the previous feature extraction layer. While learning the recognition of the area touched by the second finger, additional full connection layers are added to learn and extract whether there are hands, left and right hands, key points, and rotation angles of hands. Then, the processing results of multiple tasks are integrated to classify the operation gestures in the recognized hand image.

In the training mode, a label smoothing is used for model training, and a focal loss function is used to calculate the loss value to improve the classification accuracy of the deep learning model.

The field of the technical solution belongs to the field of gesture recognition. Through detecting, tracking and action classifying of the hand in the image, the purpose of distinguishing gesture actions and realizing human-computer interaction is achieved.

The technical solution provided by embodiments of the present invention can be applied to the human-computer interaction of AR/VR/MR and other equipment, and also can be used for the remote linkage and control of AIoT and other intelligent furniture equipment. In application scenarios where external devices such as keyboard and mouse are not available or inconvenient to be used outdoors, but human-computer interaction is needed, the present invention can collect hand photos through a camera, recognize gesture actions for control or input.

The present invention is based on a one hand trigger. By touching the corresponding areas of the finger knuckles with the thumb, the touch area can be recognized and the corresponding input or control can be triggered. In addition, there are up to 80 touch areas integrating the left and right hands, and the gesture categories are rich.

The present invention performs hand detection and gesture recognition based on deep learning, and the hand does not need to wear additional sensors or markers.

The gesture recognition of the present invention is based on the image classification task, which can avoid the inaccurate detection of key points due to the self-occlusion of the hand in the gesture recognition based on key point detection.

In the embodiments of the present invention, the hand detection and gesture recognition are based on neural networks.

The gestures in the present invention are defined as shown in Figs. 3 to 6. The coarse-grained categories are gesture 1, gesture 2, gesture 3 and gesture 4 respectively. Then, under each coarse-grained category, several regions are divided. The scheme of the present invention can recognize which coarse-grained category a gesture belongs to through the neural network.

As illustrated in Fig. 7, the touch area is the touch area 1, and the operation gesture input by the user is gesture 1. As illustrated in Fig. 8, the touch area is the touch area10, and the operation gesture input by the user is gesture 2.

Embodiment of the present invention use a convenient gesture recognition scheme, which can be widely used in AR, VR, MR and other human-computer interaction scenarios without external hardware input devices, and the hand does not need to wear additional sensors or make marks; The recognition method based on classification can avoid the inaccurate prediction of key points of the hand caused by the self-occlusion of the hand. With one hand operating, the scheme can support 80 types of gestures, which can be used for conventional character input and control.

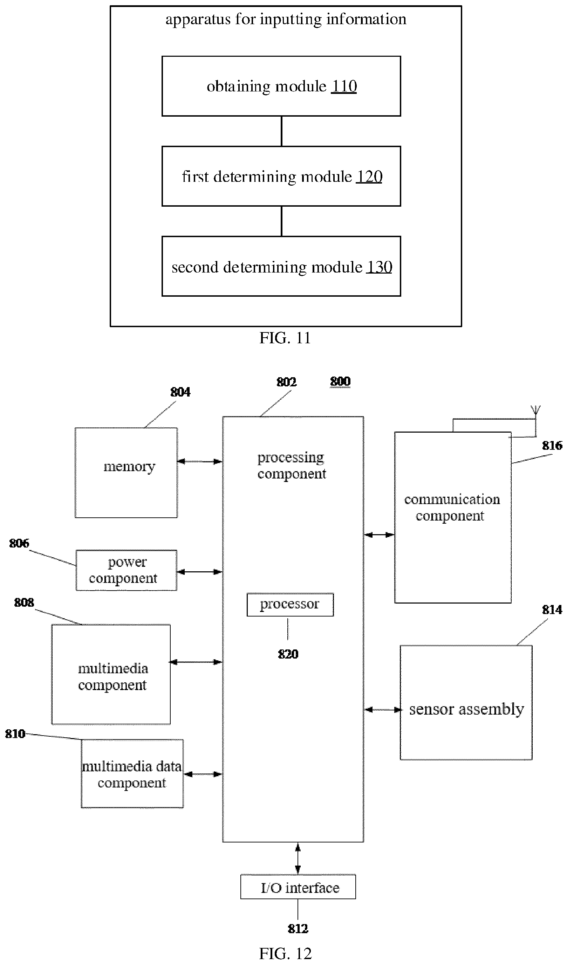

As illustrated in Fig. 11, embodiments of the present invention provide an apparatus for inputting information, including: an obtaining module 110, configured to obtain a hand image; a first determining module 120, configured to determine one or more first fingers in an open state in the hand image, and a target touch area touched by a second finger in the one or more first fingers and/or a palm, the target touch area being one of set touch areas pre-divided in the one or more first fingers and/or the palm; a second determining module 130, configured to determine target information to be input according to the one or more first fingers in the open state and the target touch area.

The apparatus for inputting information may be included in the target device or may be included in the control device of the target device.

In some embodiments, the obtaining module 110, the first determining module 120 and the second determining module 130 may be program modules. When the program modules are executed by the processor, the above operations can be implemented.

In other embodiments, the obtaining module 110, the first determining module 120 and the second determining module 130 may be soft and hard combination modules; the soft and hard combination modules include but are not limited to programmable arrays; the programmable arrays include but are not limited to field programmable arrays and/or complex programmable arrays.

In some other embodiments, the obtaining module 110, the first determining module 120 and the second determining module 130 may be pure hardware modules. The pure hardware modules include but are not limited to application specific integrated circuits.

In some embodiments, the set touch area includes at least one of: an area between finger knuckles, an area between a fingertip and a finger knuckle, an area in the palm near a finger base, an area where a fingertip is located, an area at an interdigital space between the fingers that are closed together, an area where a finger knuckle is located, an area inside the palm.

In some embodiments, the second determining module 130 is specifically configured to determine the target information to be input according to the one or more first fingers in the open state and the target touch area, based on preset correspondence relationships. The preset correspondence relationships at least include a relationship between each set touch area in the one or more first fingers and/or the palm and the input information, with different first fingers in the open state.

In some embodiments, the preset correspondence relationships are determined according to at least one of: a relationship between a number of set touch areas divided in the one or more first fingers and/or the palm and a number of input keys related to input contents or input functions, with different first fingers in the open state; a relationship between a number of set touch areas divided in the one or more first fingers and/or the palm and a number of input keys with a usage frequency greater than a preset frequency, with different first fingers in the open state; a relationship between a relative position between the set touch areas divided in the one or more first fingers and/or the palm and keys with a probability of being continuously selected by a user higher than a preset probability, with different first fingers in the open state.

In some embodiments, the obtaining module 110 is further configured to display in each set touch area of the one or more first fingers and/or the palm the input information corresponding to this set touch area according to the preset correspondence relationships.

In an embodiment, the obtaining module 110 is further configured to obtain the hand image in response to detecting that the second finger touches any target touch area in the set touch areas, or obtain the hand image of any frame within the touch duration in response to detecting that a touch duration of the second finger touching any target touch area in the set touch areas exceeds a preset duration.

In some embodiments, the obtaining module 110 is configured to determine whether a predefined or set wake-up operation is detected. The set wake-up operation is configured to instruct start of information input through the hand image

In some embodiments, the first determining module 120 is configured to: when there is a single hand in the hand image, determine the one or more first fingers in the open state of the single hand, and the target touch area touched by the second finger of the single hand in the one or more first fingers and/or the palm of the single hand, the single hand is a left or right hand; when there are left and right hands in the hand image, determine the one or more first fingers in the open state of the left hand, and the target touch area touched by the second finger of the left hand in the one or more first fingers and/or the palm of the left hand, and determine the one or more first fingers in the open state of the right hand, and the target touch area touched by the second finger of the right hand in the one or more first fingers and/or the palm of the right hand.

In some embodiments, the one or more first fingers and the second finger are fingers of the same hand, and the second finger is a thumb.

Embodiments of the present invention provide an electronic device, including: a memory, configured to store processor-executable instructions; a processor, connected with the memory. The processor is configured to implement the method for inputting information that provided by any of the above technical solutions, and may specifically include the method shown in any one of Fig. 1, Fig. 2, and Fig. 10.

The electronic device includes but is not limited to various fixed terminals and/or mobile terminals.

The processor can be connected to the memory through a bus, and the bus includes but is not limited to an IPS bus and/or an I²C bus.

In some embodiments, the electronic device further includes a network interface, which is also connected to the processor via a bus. The network interface may be used to connect the electronic device to a network.

Embodiments of the present invention provide a non-transitory computer-readable storage medium, when instructions stored in the storage medium are executed by a processor of a computer, cause the computer to implement the method for inputting information provided by any of the foregoing technical solutions, such as the method shown in any of Fig. 1 , Fig. 2 and Fig. 10.

Referring to Fig. 12, an embodiment of the present invention provides an electronic device, which is the aforementioned display device. The electronic device 800 may include one or more of the following components: a processing component 802, a memory 804, a power component 806, a multimedia component 808, a multimedia data component 810, an input/output (I/O) interface 812, a sensor assembly 814, and a communication component 816. The processing component 802 generally controls the overall operation of the electronic device 800, such as operations associated with display, telephone call, data communication, camera operation, and recording operation. The processing component 802 may include one or more processors 820 to execute instructions to complete all or part of the steps of the method described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the electronic device 800. Examples of such data include instructions for any application or method operating on the electronic device 800, contact data, phonebook data, messages, pictures, videos, and the like. The memory 804 may be implemented by any type of volatile or nonvolatile storage device or a combination of above, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 806 provides power to various components of the electronic device 800. The power component 806 may include a power management system, one or more power sources, and other components associated with generating, managing, and distributing power to the electronic device 800.

The multimedia component 808 includes a screen that provides an output interface between the electronic device 800 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor may sense the boundary of the touch or slide action and detect the duration and pressure related to the touch or sliding operation. In some embodiments, the multimedia component 808 includes a front camera and/or a rear camera. When the electronic device 800 is in an operating state, such as a shooting state or a video state, the front camera and/or the rear camera may receive external multimedia data. Each front camera and rear camera may be a fixed optical lens system or have focal length and optical zoom capability.

The multimedia data component 810 is configured to output and/or input multimedia data signals. For example, the multimedia data component 810 includes a microphone (MIC) configured to receive external multimedia data signals when the electronic device 800 is in an operating state, such as a call state, a recording state, and a voice recognition state. The received multimedia data signal may be further stored in the memory 804 or transmitted via the communication component 816.

In some embodiments, the multimedia data component 810 further includes a speaker configured to output multimedia data signals.

The I/O interface 812 provides an interface between the processing component 802 and a peripheral interface module, which may be a keyboard, a click wheel, an operation button, etc. These operation buttons may include, but are not limited to, a home operation button, a volume operation button, a start operation button, and a lock operation button.

The sensor assembly 814 includes one or more sensors for providing various aspects of state evaluation for the electronic device 800. For example, the sensor assembly 814 can detect the opening/closing state of the electronic device 800, the relative positioning of the components, such as the display and keypad of the electronic device 800. The sensor assembly 814 can also detect the position change of the electronic device 800 or one component of the electronic device 800, the presence or absence of the user's contact with the electronic device 800, the orientation or acceleration/deceleration of the electronic device 800, and the temperature change of the electronic device 800. The sensor assembly 814 may include a proximity sensor configured to detect the presence of nearby objects in the absence of any physical contact. The sensor assembly 814 may also include a light sensor, such as a CMOS or CCD image sensor, for use in imaging applications. In some embodiments, the sensor assembly 814 may also include an acceleration sensor, a gyro sensor, a magnetic sensor, a pressure sensor, or a temperature sensor.

The communication component 816 is configured to facilitate wired or wireless communication between the electronic device 800 and other devices. The electronic device 800 may access a wireless network based on a communication standard, such as Wi-Fi, 2G or 3G, or a combination of above. In an embodiment, the communication component 816 receives broadcast signals or broadcast related information from an external broadcast management system via a broadcast channel. In an embodiment, the communication component 816 also includes a near field communication (NFC) module to facilitate short-range communication. For example, the NFC module can be implemented based on radio frequency identification (RFID) technology, infrared data association (IrDA) technology, ultra wideband (UWB) technology, Bluetooth (BT) technology and other technologies.

In an embodiment, the electronic device800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components configured to perform the method for inputting information provided by any of the above embodiments.

The method for inputting information may include: obtaining a hand image; determining one or more first fingers in an open state in the hand image, and a target touch area touched by a second finger in the one or more first fingers and/or a palm, the target touch area being one of set touch areas pre-divided in the one or more first fingers and/or the palm; determining target information to be input according to the one or more first fingers in the open state and the target touch area.

It can be understood that the set touch area includes at least one of: an area between finger knuckles, an area between a fingertip and a finger knuckle, an area in the palm near a finger base, an area where a fingertip is located, an area at an interdigital space between the fingers that are closed together, an area where a finger knuckle is located, an area inside the palm.

It can be understood that determining the target information to be input according to the one or more first fingers in the open state and the target touch area, includes: determining the target information to be input according to the one or more first fingers in the open state and the target touch area, based on preset correspondence relationships. The preset correspondence relationships at least include a relationship between each set touch area in the one or more first fingers and/or the palm and the input information, with different first fingers in the open state.

It can be understood that the preset correspondence relationships are determined according to at least one of: a relationship between a number of set touch areas divided in the one or more first fingers and/or the palm and a number of input keys related to input contents or input functions, with different first fingers in the open state; a relationship between a number of set touch areas divided in the one or more first fingers and/or the palm and a number of input keys with a usage frequency greater than a preset frequency, with different first fingers in the open state; a relationship between a relative position between the set touch areas divided in the one or more first fingers and/or the palm and keys with a probability of being continuously selected by a user higher than a preset probability, with different first fingers in the open state.

It can be understood that before obtaining the hand image, the method further includes: displaying in each set touch area of the one or more first fingers and/or the palm the input information corresponding to this set touch area according to the preset correspondence relationships.

It can be understood that obtaining the hand image includes: in response to detecting that the second finger touches any target touch area in the set touch areas, obtaining the hand image; or in response to detecting that a touch duration of the second finger touching any target touch area in the set touch areas exceeds a preset duration, obtaining the hand image of any frame within the touch duration.

It can be understood that obtaining before obtaining the hand image, the method further includes: determining whether a set or predefined wake-up operation is detected. The set wake-up operation is configured to instruct start of information input through the hand image.

It can be understood that determining the one or more first fingers in the open state in the hand image, and the target touch area touched by the second finger in the one or more first fingers and/or the palm, includes: when there is a single hand in the hand image, determining the one or more first fingers in the open state of the single hand, and the target touch area touched by the second finger of the single hand in the one or more first fingers and/or the palm of the single hand, the single hand being a left or right hand; when there are left and right hands in the hand image, determining the one or more first fingers in the open state of the left hand, and the target touch area touched by the second finger of the left hand in the one or more first fingers and/or the palm of the left hand, and determining the one or more first fingers in the open state of the right hand, and the target touch area touched by the second finger of the right hand in the one or more first fingers and/or the palm of the right hand.

In can be understood that the one or more first fingers and the second finger are fingers of the same hand, and the second finger is a thumb.

Those skilled in the art will easily think of other embodiments of the present invention after considering the description and practicing the invention disclosed herein. The present invention is intended to cover any variation, use or adaptive change of the present invention, which follows the general principles of the present invention and includes the common knowledge or customary technical means in the technical field not disclosed in the present invention. The description and the embodiments are only considered as exemplary, and the true scope of the present invention are indicated by the following claims.

It should be understood that the present invention is not limited to the precise structure already described above and shown in the drawings, and various modifications and changes may be made without departing from the scope thereof. The scope of the present invention is limited only by the appended claims.

## Claims

1. A method for inputting information, comprising:
obtaining (S110) a hand image;
determining (S120) one or more first fingers in an open state in the hand image, and a target touch area touched by a second finger; wherein the target touch area is one of set touch areas pre-divided in the one or more first fingers or in a palm or in the one or more first fingers and the palm; and
determining (S130) target information to be input according to the one or more first fingers in the open state and the target touch area.

2. The method according to claim 1, wherein the set touch areas comprise at least one of:
an area between finger knuckles, an area between a fingertip and a finger knuckle, an area in the palm near a finger base, an area where a fingertip is located, an area at an interdigital space between the fingers that are closed together, an area where a finger knuckle is located, and an area inside the palm.

3. The method according to claim 1 or 2, wherein determining the target information to be input according to the one or more first fingers in the open state and the target touch area, comprises:
determining (S131) the target information to be input according to the one or more first fingers in the open state and the target touch area, based on preset correspondence relationships;
wherein the preset correspondence relationships at least comprise a relationship between each set touch area in the one or more first fingers or in the palm or in the one or more first fingers and the palm and the input information, with different first fingers in the open state.

4. The method according to claim 3, wherein the preset correspondence relationships are determined according to at least one of:
a relationship between a number of set touch areas divided in the one or more first fingers or in the palm or in the one or more first fingers and the palm and a number of input keys related to input contents or input functions, with different first fingers in the open state;
a relationship between the number of set touch areas divided in the one or more first fingers or in the palm or in the one or more first fingers and the palm and a number of input keys with a usage frequency greater than a preset frequency, with different first fingers in the open state;
a relationship between a relative position between the set touch areas divided in the one or more first fingers or in the palm or in the one or more first fingers and the palm and keys with a probability of being continuously selected by a user higher than a preset probability, with different first fingers in the open state.

5. The method according to claim 3 or 4, wherein before obtaining the hand image, the method further comprises:
displaying in each set touch area of the one or more first fingers or the palm or the one or more first fingers and the palm, the input information corresponding to the set touch area according to the preset correspondence relationships.

6. The method according to any one of the preceding claims, wherein obtaining the hand image comprises:
in response to detecting that the second finger touches any target touch area in the set touch areas, obtaining the hand image; or
in response to detecting that a touch duration of the second finger touching any target touch area in the set touch areas exceeds a preset duration, obtaining the hand image of any frame within the touch duration.

7. The method according to any one of the preceding claims, wherein before obtaining the hand image, the method further comprises:
determining whether a set wake-up operation is detected; wherein the set wake-up operation is configured to instruct start of information input through the hand image.

8. The method according to any one of the preceding claims, wherein determining the one or more first fingers in the open state in the hand image, and the target touch area touched by the second finger, comprises:
when there is a single hand in the hand image, determining the one or more first fingers in the open state of the single hand, and the target touch area touched by the second finger of the single hand in the single hand, wherein the single hand is a left or right hand;
when there are left and right hands in the hand image, determining the one or more first fingers in the open state of the left hand, and the target touch area touched by the second finger of the left hand in the left hand, and determining the one or more first fingers in the open state of the right hand, and the target touch area touched by the second finger of the right hand in the right hand.

9. The method according to any one of the preceding claims, wherein determining the one or more first fingers in the open state in the hand image, and the target touch area touched by the second finger, comprises:
determining a gesture group based on the one or more first fingers in the open state, wherein the gesture group comprises a plurality of gesture operations formed by touching different set touch areas with the second finger, when the one or more first fingers are determined to be in the open state; and
determining the gesture operation corresponding to the hand image from the determined gesture group, and determining the target touch area touched by the second finger according to the determined gesture operation.

10. An apparatus for inputting information, comprising:
an obtaining module (110) configured to obtain a hand image;
a first determining module (120) configured to determine one or more first fingers in an open state in the hand image, and a target touch area touched by a second finger; wherein the target touch area is one of set touch areas pre-divided in the one or more first fingers or in a palm or in the one or more first fingers and the palm; and
a second determining module (130) configured to determine target information to be input according to the one or more first fingers in the open state and the target touch area.

11. The apparatus according to claim 9, wherein the second determining module (130) is further configured to determine the target information to be input according to the one or more first fingers in the open state and the target touch area, based on preset correspondence relationships, wherein the preset correspondence relationships at least comprise a relationship between each set touch area in the one or more first fingers or in the palm or in the one or more first fingers and the palm and the input information, with different first fingers in the open state.

12. The apparatus according to claim 11, wherein the obtaining module (110) is further configured to display in each set touch area of the one or more first fingers or the palm or the one or more first fingers and the palm, the input information corresponding to the set touch area according to the preset correspondence relationships.

13. The apparatus according to any one of claims 9 to 11, wherein the obtaining module (110) is further configured to obtain the hand image in response to detecting that the second finger touches any target touch area in the set touch areas, or obtain the hand image of any frame within the touch duration in response to detecting that a touch duration of the second finger touching any target touch area in the set touch areas exceeds a preset duration.

14. The apparatus according to any one of claims 9 to 12, wherein the obtaining module (110) is further configured to determine whether a set wake-up operation is detected, wherein the set wake-up operation is configured to instruct start of information input through the hand image.

15. A non-transitory computer-readable storage medium, wherein when instructions in the storage medium are executed by a processor of a computer, the computer is enabled to implement the method for inputting information of any one of claims 1 to 9.
